# EUROPEAN PATENT APPLICATION

(11) **EP 4 788 021 A1**
(43) Date of publication of application: **05.08.2026**
(21) Application number: 23953356.5
(22) Date of filing: 25.09.2023
(51) Int. Cl.: H04W 72/232

(54) **METHOD AND APPARATUS FOR RECEIVING APERIODIC CHANNEL STATE INFORMATION REFERENCE SIGNAL, AND COMMUNICATION SYSTEM**

(71) Applicant: 1FINITY INC., Kawasaki-shi, Kanagawa 211-8588 (JP)
(72) Inventor: ZHAO, Di, Beijing 100022 (CN); ZHANG, Jian, Beijing 100022 (CN); LU, Yiwen, Beijing 100022 (CN); WANG, Guotong, Beijing 100022 (CN); ZHANG, Lei, Beijing 100022 (CN)
(74) Representative: Haseltine Lake Kempner LLP
(86) International application number: PCT/CN2023/121261
(87) International publication number: WO 2025/065192

(57) **Abstract**

Embodiments of this disclosure provide a method and apparatus for receiving an aperiodic channel state information reference signal and a communication system. The apparatus for receiving an aperiodic channel state information reference signal includes: a first receiver configured to receive first information carried by higher layer signaling, the first information being at least used for the terminal equipment to determine a transmission configuration indication state for reception of the aperiodic channel state information reference signal, the first information comprises a first parameter and qcl-info, the first parameter and the qcl-info being optional fields, or the first information comprises a first parameter, a second parameter and qcl-info, the first parameter, the second parameter and the qcl-info being optional fields; and a second receiver configured to receive the aperiodic channel state information reference signal according to the transmission configuration indication state as determined.

## Description

### Technical Field

This disclosure relates to the field of communication technologies.

### Background

A unified TCI (transmission configuration indication) framework is standardized in Rel-17 in 3GPP (Third Generation Partnership Project). The Rel-17 unified TCI is for a STRP (single transmission and reception point) scenario. A network device uses RRC (radio resource control) signaling to configure M (M≥1) TCI states for a terminal equipment, uses an MAC CE (media access control control element) to activate N (N ≤8) groups of TCI states in M TCI states, and uses DCI (downward control information) to indicate L (1≤L≤N) groups of TCI states in N groups of TCI states. Transmission configuration indication (TCI) field of the DCI (specifically DCI format 1_1 or DCI format 1_2) indicates a group of TCI states (the TCI state indicated by the TCI field of the DCI will be hereinafter referred to as an indicated TCI state, and for ease of expression, "indicated by the TCI field of the DCI" will be referred to as "indicated by the DCI"), each group of TCI states including one or more TCI states.

A TCI state may include or correspond to one or two source reference signals (RSs). The source reference signal may provide a quasi-co-location (QCL) reference for downlink reception (the QCL reference will be hereinafter referred to as beam information, and meanings thereof may differ in technical details, but may be understood as being identical in this text), which is referred to as a downlink source reference signal. The source reference signal may provide a QCL reference for uplink transmission, which is referred to as an uplink source reference signal. Providing a QCL reference for uplink transmission refers to providing a reference for determining an uplink transmission (UL Tx) spatial filter. The downlink source reference signal provides a QCL reference for reception of a certain downlink channel/signal, which means that a beam used by the terminal equipment to receive a certain channel/signal is identical to some channels of the downlink source reference signal with respect to large-scale characteristics. That the uplink source reference signal provides a QCL reference for reception of a certain downlink channel/signal means that a beam used by the terminal equipment to transmit a certain channel/signal is identical to some channels of the uplink source reference signal with respect to large-scale characteristics.

The TCI states include a joint TCI state and a separate TCI state, wherein the "joint" or "separate" refers to uplink and downlink joint or uplink and downlink separate. A source reference signal contained in a downlink TCI state (DL TCI state) is a downlink source reference signal, a source reference signal contained in an uplink TCI state (UL TCI state) is an uplink source reference signal, and a source reference signal contained in a joint TCI state is both a downlink source reference signal and an uplink source reference signal. The joint TCI state acts simultaneously on both a downlink beam (receive beam) and an uplink beam (transmit beam), that is, there exists reciprocity between uplink beams and downlink beams.

Multiple transmission and reception point (MTRP) transmission is an important scenario in a 5G NR system, and is introduced in Rel-16. With MTRP-based transmission, a goal of improving throughput or reliability may be achieved. MTRP-based PDSCH transmission is standardized in Rel-16, and MTRP-based PDCCH, PUSCH and PUCCH transmissions are standardized in Rel-17. The MTRP transmission includes S-DCI (single DCI)-based MTRP transmission and M-DCI (multiple DCI)-based MTRP transmission. For the S-DCI-based MTRP transmission, one piece of DCI schedules uplink and downlink transmissions of two TRPs, which is more suitable for cases where backhaul between TRPs is ideal. For the M-DCI-based MTRP transmission, two TRPs use two pieces of DCI to schedule uplink and downlink transmissions of their respective TRPs, which is more suitable for cases where backhaul between TRPs is not very ideal. Following discussions are focused on MTRP according to S-DCI.

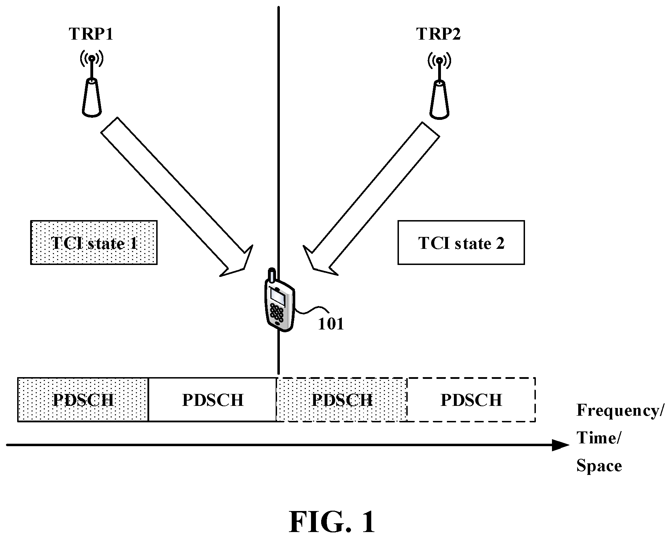

FIG. 1 provides a schematic illustration of reception of a physical downlink shared channel (PDSCH) based on MTRP. A terminal equipment 101 receives two paths of PDSCHs from TRP1 and TRP2. For example, the terminal equipment 101 may receive the two paths of PDSCHs in a spatial division, or time division, or frequency division manner. The terminal receives the two paths of PDSCHs according to quasi-co-location address information provided by TCI state 1 and TCI state 2, respectively.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary

The MTRP introduced in Rel-16 is under a traditional TCI state framework, and a unified TCI newly introduced in Rel-17 only supports STRP. Taking importance of MTRP and the introduction of the unified TCI, it is necessary to design a corresponding unified TCI mechanism for MTRP transmission scenarios. In 3GPP, the unified TCI framework will be extended to the MTRP transmission scenarios in Rel-18, which has been determined as one of project proposals for Rel-18, and relevant standardization works are currently underway.

In the unified TCI scheme under the MTRP transmission scenarios in Rel-18, for a terminal equipment, there exist a downlink (DL) and an uplink (UL) corresponding to each TRP. There are total four links between the UE and the two TRPs, a downlink of UE-TRP1 (hereinafter referred to as a first downlink), an uplink of UE-TRP1 (hereinafter referred to as a first uplink), a downlink of UE-TRP2 (hereinafter referred to as a second downlink), and an uplink of UE-TRP2 (hereinafter referred to as a second uplink), so as to provide QCL references for transmission of their corresponding links.

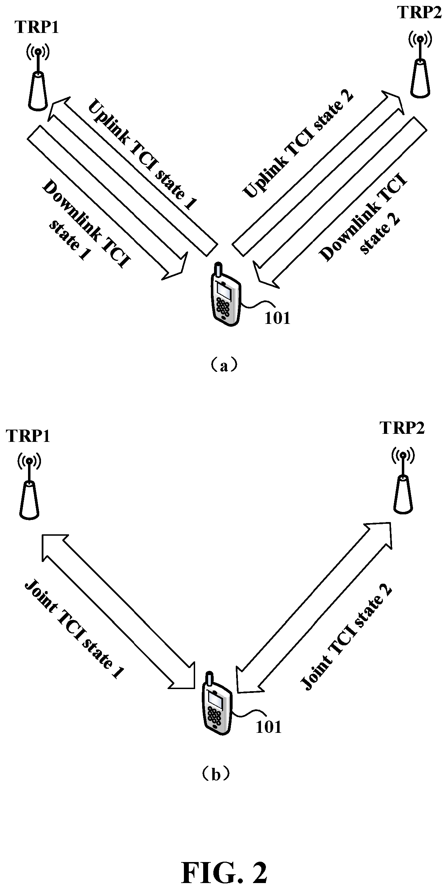

In the MTRP transmission, when a value of an RRC parameter unifiedTCI-StateType is 'separate', TCI states to which the above four links correspond are {a first downlink TCI state, a first uplink TCI state, a second downlink TCI state, a second uplink TCI state}, and QCL references may be respectively provided for the first downlink, first uplink, second downlink and second uplink, as shown in FIG. 2(a). In this case, the terminal needs to maintain the above four TCI states, and update the four TCI states according to TCI states indicated by the DCI.

In the MTRP transmission, when a value of the RRC parameter unifiedTCI-StateType is 'joint', TCI states to which the above four links correspond are {a first joint TCI state, a second joint TCI state}, wherein the first joint TCI state may provide QCL references for the first downlink and the first uplink, as shown in FIG. 2(b). In this case, the terminal needs to maintain the above two TCI states, and update the two TCI states according to the TCI states indicated by the DCI.

FIG. 2 (a) is a schematic diagram of the joint TCI state in Rel-18, and FIG. 2 (b) is a schematic diagram of the separate TCI state in Rel-18.

It was found by the inventor of this disclosure that in the prior art (such as the MTRP scenario in Rel-18), there is no clear mechanism to determine whether the terminal equipment receives an aperiodic channel state information reference signal (CSI-RS) based on a TCI state provided in a high-layer parameter qcl-info or based on an indicated TCI state. Therefore, clarifying a reception mode of an aperiodic CSI-RS is a problem urgently needing to be solved.

In order to solve at least one of the above problems or other similar problems, embodiments of this disclosure provide a method and apparatus for receiving an aperiodic channel state information reference signal and a communication system.

According to one aspect of the embodiments of this disclosure, there is provided an apparatus for receiving an aperiodic channel state information reference signal, applicable to a terminal equipment, the apparatus including:
a first receiver configured to receive first information carried by higher layer signaling, the first information being at least used for the terminal equipment to determine a transmission configuration indication state for reception of the aperiodic channel state information reference signal, wherein the first information includes a first parameter and qcl-info, the first parameter and the qcl-info being optional fields, or the first information includes a first parameter, a second parameter and qcl-info, the first parameter, the second parameter and the qcl-info being optional fields; and
a second receiver configured to receive the aperiodic channel state information reference signal according to the transmission configuration indication state as determined.

According to another aspect of the embodiments of this disclosure, there is provided a method for receiving an aperiodic channel state information reference signal, applicable to a terminal equipment, the method including:
receiving first information carried by higher layer signaling, the first information being at least used for the terminal equipment to determine a transmission configuration indication state for reception of the aperiodic channel state information reference signal, wherein the first information includes a first parameter and qcl-info, the first parameter and the qcl-info being optional fields, or the first information includes a first parameter, a second parameter and qcl-info, the first parameter, the second parameter and the qcl-info being optional fields; and
receiving the aperiodic channel state information reference signal according to the transmission configuration indication state as determined.

An advantage of the embodiments of this disclosure exists in that this disclosure clarifies a TCI state applied when the terminal equipment receives the aperiodic CSI-RS, resolves ambiguities in receiving the aperiodic CSI-RS, and may efficiently improve reliability of transmission of the system.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of MTRP-based PDSCH reception;
FIG. 2 is a schematic diagram of a joint TCI state and a separate TCI state;
FIG. 3 is a schematic diagram of a communication system of this disclosure;
FIG. 4 is a schematic diagram of a method for receiving an aperiodic channel state information reference signal of an embodiment of this disclosure;
FIG. 5 is another schematic diagram of the method for receiving an aperiodic channel state information reference signal of the embodiment of this disclosure;
FIG. 6 is a further schematic diagram of the method for receiving an aperiodic channel state information reference signal of the embodiment of this disclosure;
FIG. 7 is a schematic diagram of an apparatus for receiving an aperiodic channel state information reference signal of an embodiment of a second aspect of this disclosure;
FIG. 8 is another schematic diagram of the apparatus for receiving an aperiodic channel state information reference signal of the embodiment of the second aspect of this disclosure;
FIG. 9 is a further schematic diagram of the apparatus for receiving an aperiodic channel state information reference signal of the embodiment of the second aspect of this disclosure; and
FIG. 10 is a schematic diagram of an electronic device of a third aspect of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and New Radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, higher layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, media access control (MAC) signaling, or an MAC control element (MAC CE); however, this disclosure is not limited thereto.

Scenarios in the embodiments of this disclosure shall be described below by way of examples; however, this disclosure is not limited thereto.

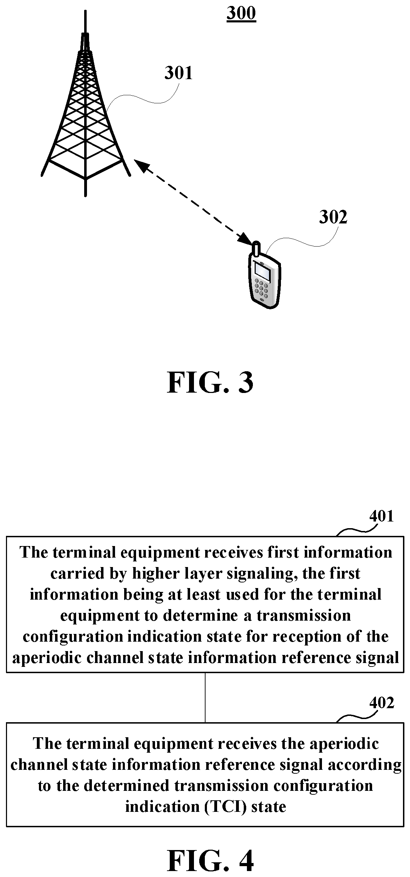

FIG. 3 is a schematic diagram of a communication system of an embodiment of this disclosure, in which a case where a terminal equipment and a network device are taken as examples is schematically shown. As shown in FIG. 3, the communication system 300 may include a network device 301 and a terminal equipment 302 (for the sake of simplicity, an example having only one terminal equipment is schematically given in FIG. 3).

In the embodiment of this disclosure, existing services or services that may be implemented in the future may be performed between the network device 301 and the terminal equipment 302. For example, such services may include but not limited to an enhanced mobile broadband (eMBB), massive machine type communication (mMTC), and ultra-reliable and low-latency communication (URLLC), etc.

The terminal equipment 302 may transmit data to the network device 301, such as in a granted (such as configured grant) or grant-free transmission manner. The network device 101 may receive data transmitted by one or more terminal equipments 302 and feed back information to the terminal equipments 302, such as acknowledgement (ACK)/non-acknowledgement (NACK) information. According to the feedback information or a new grant, the terminal equipments 302 may acknowledge end of a transmission process, or may perform new data transmission, or may perform data retransmission. For the grant-free transmission manner, the terminal equipments 302 may perform transmission of new data or perform retransmission on the configured grant.

The unified TCI framework shall be described below. In a unified TCI state, complete steps indicated by the unified TCI state may be divided into three steps.

### Step 1: RRC configuration

When a value of an RRC parameter *unifiedTCI-StateType* is 'joint', an RRC layer will configure up to 128 TCI states in a *dl-OrJointTCI-StateList* list, wherein the TCI states are joint TCI states, and may simultaneously provide QCL references for both downlink and uplink.

When a value of the RRC parameter *unifiedTCI-StateType* is 'separate', the RRC layer will configure up to 128 TCI states in the *dl-OrJointTCI-StateList* list, wherein the TCI states are separate DL TCI states, and may provide a QCL reference for downlink. At the same time, the RRC layer will also configure up to 64 TCI states in a *ul-TCI-ToAddModList* list, wherein the TCI states are separate UL TCI states, and may provide a QCL reference for uplink transmission.

### Step 2: MAC-CE activation/deactivation

Up to 8 groups of TCI States are selected to be activated via an MAC-CE command (i.e. a unified TCI states activation/deactivation MAC CE), wherein the up to 8 groups correspond respectively to the 8 TCI codepoints that are able to be indicated by a TCI field in the DCI (see step 3 for an explanation of the TCI codepoints). In Rel-17, corresponding to each codepoint, 1 or 2 TCI states (i.e. a group of TCI states) may be activated, which may provide QCL references for uplink and/or downlink from a terminal equipment (e.g. a UE) to a single TRP.

For example, in Rel-18, as expanded to be able to support MTRP transmission (actually 2-TRP transmission), corresponding to each TCI codebook, there will be more possibilities of combinations of TCI states that may be activated.

In MTRP transmission based on S-DCI (single downlink control information), when a value of the RRC parameter *unifiedTCI-StateType* is 'separate', a corresponding TCI codepoint may activate four complete TCI states, i.e. {a first downlink TCI state, a first uplink TCI state, a second downlink TCI state, a second uplink TCI state}, or may activate any non-empty subset of the four TCI states, and when a value of the RRC parameter *unifiedTCI-StateType* is 'joint', a corresponding TCI codepoint may activate two complete TCI states, i.e. {a first joint TCI state, a second joint TCI state}, or may activate any non-empty subset of the two TCI states.

In MTRP transmission based on M-DCI (multiple downlink control information), different TRPs are distinguished by a higher layer parameter coresetPoolIndex. When a value of coresetPoolIndex is 0, the MAC-CE command of the unified TCI state activation/deactivation may be a first TRP active TCI state, and when a value of coresetPoolIndex is 1, the MAC-CE command of the unified TCI state activation/deactivation may be a second TRP active TCI state. When coresetPoolIndex is of a certain value, the MAC-CE command of the unified TCI state activation/deactivation may activate up to 8 groups of TCI states for a TRP therein, and a specific mode for activating a TCI state for each TCI codepoint is identical to existing techniques in Rel-17.

### Step 3: DCI indication

A group of TCI states in step 2 is selected for the a transmission configuration indication (TCI) field of DCI format 1_1/1_2, and is used for receiving or transmitting corresponding channels/signals. A value of the TCI field corresponds to a TCI codepoint, and a currently maximum width of the TCI field is 3 bits, which may indicate up to 2³=8 TCI codepoints.

In the unified TCI framework, the joint/downlink TCI states indicated by the above three steps may provide QCL references for demodulation reference signals (DM-RSs) of physical downlink shared channels (PDSCHs), provide QCL references for demodulation reference signals (DM-RSs) of physical downlink control channels (PDCCHs), and provide QCL references for channel state information reference signals (CSI-RSs). The joint/uplink TCI states indicated by the above three steps may provide QCL references for demodulation reference signals (DM-RSs) of physical uplink shared channels (PUSCHs), provide QCL references for demodulation reference signals (DM-RSs) of physical uplink control channels (PUCCHs), and provide QCL references for sounding reference signals (SRSs).

In the unified TCI framework, if a terminal equipment (e.g. a UE) operates in an S-DCI-based MTRP transmission scenario, in a case where the UE has already applied the first TCI state, first uplink TCI state, second downlink TCI state and second uplink TCI state, or there exist applied first joint TCI state and second joint TCI state (all four links from the UE to two TRPs have corresponding TCI states):
(1) when the TCI field of DCI format 1_1/1_2 indicates a complete set of {a first downlink TCI state, a first uplink TCI state, a second downlink TCI state, a second uplink TCI state} or {a first joint TCI state, a second joint TCI state}, TCI states to which the links correspond will be updated with this group of indicated TCI states;
(2) when the TCI field of DCI format 1_1/1_2 indicates a non-empty subset of {a first downlink TCI state, a first uplink TCI state, a second downlink TCI state, a second uplink TCI state} or {a first joint TCI state, a second joint TCI state}, TCI states of corresponding links will be updated with TCI states included in the subset, and TCI states not in the subset remain unchanged.

If the UE operates in the M-DCI-based MTRP transmission scenario, in a case where a value of coresetPoolIndex is determined, a mode for updating the indicated TCI states may be based on existing techniques in Rel-17.

In this disclosure, the uplink/downlink/joint TCI states indicated by the DCI after the above three steps may be collectively referred to as indicated TCI states, and indicated joint/downlink TCI states that may be used for downlink channels/signals including CSI-RSs are referred to as first indicated DL/joint TCI states or second indicated DL/joint TCI states.

In the following text, in an M-DCI-based MTRP scheme, the first downlink/uplink/joint TCI states refer to downlink/uplink/joint TCI states corresponding to coresetPoolIndex with a value of 0, and the second downlink/uplink/joint TCI states refer to downlink/uplink/joint TCI states corresponding to coresetPoolIndex with a value of 1.

In the embodiments of this disclosure, the TCI states applied to the indicated CSI-RSs refer to the first indicated joint/downlink TCI state or the second indicated joint/downlink TCI states, and the indicated TCI state applied to CSI-RSs may provide QCL references for the aperiodic CSI-RS received by the terminal equipment.

The CSI-RS shall be described below.

The CSI-RS belongs to downlink reference signals in an NR system, and is mainly used in the following aspects:
acquiring channel state information, this type of CSI-RS is referred to as a CSI-RS for acquiring channel state information (CSI) (CSI-RSs for CSI);
beam management, this type of CSI-RS are referred to as CSI-RSs for beam management (BM) (CSI-RSs for CSI);
time-frequency tracking, this type of CSI-RSs are referred to as time-frequency tracking reference signals (TRSs); and
mobility management.

The NR (New Radio) system uses a higher layer parameter *CSI-ResourceConfig* to configure CSI-RS resources, wherein *resourceType* in *CSI-ResourceConfig* is used to configure time domain characteristics of the CSI-RSs. According to different time domain characteristics, the CSI-RS may be divided into the following three types:
a periodic CSI-RS, corresponding to configuring a value of resourceType to be 'periodic';
a semi-persistent CSI-RS, corresponding to configuring a value of resourceType to be 'semiPersistent'; and
an aperiodic CSI-RS, corresponding to configuring a value of resourceType to be 'aperiodic'.

Below, qcl-info of the aperiodic CSI-RS shall be described.

Transmission of the aperiodic CSI-RS is triggered by a CSI request field in DCI format 0_1/_2. The CSI request field may trigger transmission of CSI-RSs with different time domain characteristics. If the aperiodic CSI RS is triggered, qcl-info will be configured in CSI-AssociatedReportConfigInfo in a higher layer parameter CSI-AperiodicTriggerState, and qcl-info may provide the UE with a QCL reference for receiving the aperiodic CSI RS, that is, the UE may use a TCI state configured in qcl-info to receive the aperiodic CSI-RS.

In Rel-17, if qcl-info is not configured, the UE applies the indicated TCI states to the aperiodic CSI-RS, that is, applies the indicated DL/point TCI states to receiving the aperiodic CSI-RS.

In Rel-18, a new parameter is introduced in the higher layer parameter CSI-AssociatedReportConfigInfo. For example, the new parameter is named as applyIndicatedTCIState-r18, has a value range of {the first, the second}, and is used to inform the UE whether to use the first indicated DL/joint TCI states or the second indicated DL/joint TCI states for receiving aperiodic CSI-RS resources. applyIndicatedTCIState-r18 mentioned in the following text specifically refers to applyIndicatedTCIState-r18 in CSI-AssociatedReportConfigInfo.

In a higher layer parameter configuration, if a CSI-RS resource or a CSI-RS resource set where the CSI-RS resource is located is configured to apply the indicate the TCI state, a mode for receiving the aperiodic CSI-RS by the UE is determined according to a value of applyIndicatedTCIState-r18:
if the value of applyIndicatedTCIState-r18, such as 'the first', denotes the first indicated joint/downlink TCI states, applying the first indicated joint/downlink TCI states to the aperiodic CSI-RS by the UE; and
if the value of applyIndicatedTCIState-r18, such as 'the second', denotes the second indicated joint/downlink TCI states, applying the second indicated joint/downlink TCI states to the aperiodic CSI-RS by the UE.

In the embodiments of this disclosure:
applying the TCI states to the aperiodic CSI-RS (channel state information reference signal) refers to that the terminal equipment receives the aperiodic CSI-RS based on the TCI states;
the unified TCI framework and the unified TCI framework are interchangeable, and meanings thereof are identical;
when the transmission configuration indication (TCI) state used for receiving the aperiodic channel state information reference signal (CSI-RS) is the indicated TCI state, the indicated TCI state is the indicated joint/downlink TCI state;
the indicated joint/downlink TCI state may be the first indicated joint/downlink TCI stat or the second indicated joint/downlink TCI state;
the first indicated joint/downlink TCI state and the first indicated joint/DL TCI state are interchangeable, and meanings thereof are identical;
the second indicated joint/downlink TCI state and the second indicated joint/DL TCI state are interchangeable, and meanings thereof are identical; and
applying the indicated TCI state to the aperiodic CSI-RS may include applying the first indicated joint/DL TCI state or the second indicated joint/DL TCI state to the aperiodic CSI-RS.

In the embodiments of this disclosure:
the applying the first indicated joint/DL TCI state or the second indicated joint/DL TCI state to the aperiodic CSI-RS refers to applying the first indicated joint/DL TCI state or the second indicated joint/DL TCI state to receiving the aperiodic CSI-RS;
the applying the TCI state configured in qcl-info to the aperiodic CSI-RS refers to applying the TCI state configured in qcl-info to receiving the aperiodic CSI-RS.

In the embodiments of this disclosure:
'a parameter' (such as a first parameter, or a second parameter, or a third parameter, or qcl-info, etc.) and 'a domain' have identical meanings and may be interchangeable in this disclosure.

### Embodiment of a first aspect

When the terminal equipment receives the aperiodic CSI-RS, it may apply the TCI state provided in qcl-info or may apply the indicated TCI state to the aperiodic CSI-RS, that is, both the higher layer parameter qcl-info and the indicated TCI state may provide QCL references for receiving the aperiodic CSI-RS by the terminal equipment.

However, in the prior art (such as in the MTRP scenario in Rel-18), there is no clear mechanism for determining whether the aperiodic CSI-RS resource or the CSI-RS resource set where the CSI-RS resource is located is configured to apply the indicated TCI state. That is, a mode for receiving the aperiodic CSI-RS by the terminal equipment is indefinite, hence, there exist ambiguities in a process of receiving the aperiodic CSI-RS, and reliability of transmission of the system is lowered.

In order to solve the above problems or at least similar problems, the embodiment of the first aspect of this disclosure provides a method for receiving an aperiodic channel state information reference signal. The method is applicable to a terminal equipment, such as the terminal equipment 301 in FIG. 3.

FIG. 4 is a schematic diagram of the method for receiving an aperiodic channel state information reference signal of the embodiment of this disclosure. As shown in FIG. 4, the method includes:
operation 401: The terminal equipment receives first information carried by higher layer signaling, the first information being at least used for the terminal equipment to determine a transmission configuration indication (TCI) state for reception of the aperiodic channel state information reference signal (CSI-RS); and
operation 402: The terminal equipment receives the aperiodic channel state information reference signal (CSI-RS) according to the determined transmission configuration indication (TCI) state.

The first information includes a first parameter and qcl-info, the first parameter and the qcl-info being optional fields, for example, in a communication protocol, the first information includes the first parameter and the qcl-info, or the first information in a time of transmission or reception may include at least one of the first parameter and the qcl-info or include none of the first parameter and the qcl-info; or
the first information includes a first parameter, a second parameter and qcl-info, the first parameter, the second parameter and the qcl-info being optional fields, for example, in a communication protocol, the first information includes the first parameter, the second parameter and the qcl-info, or the first information in a time of transmission or reception may include at least one of the first parameter, the second parameter and the qcl-info or include none of the first parameter, the second parameter and the qcl-info.

According to the above embodiment, a TCI state applied when the terminal equipment receives the aperiodic CSI-RS is clarified, ambiguities existed in the process of receiving the aperiodic CSI-RS may be lowered, and reliability of transmission of the system may be improved.

In operations 401 and 402 of this disclosure, the determined transmission configuration indication (TCI) state refers to a transmission configuration indication (TCI) state determined based on the first information. The determined transmission configuration indication (TCI) state includes:
an indicated transmission configuration indication (TCI) state, or a transmission configuration indication (TCI) state configured in qcl-info.

The indicated TCI state is, for example, the TCI state indicated by the DCI after steps 1-3 above.

In this disclosure, the first information is, for example, a higher layer parameter CSI-AssociatedReportConfigInfo, and furthermore, the first information may be other information.

This disclosure shall be further described below with reference to specific embodiments.

### Embodiment 1

In embodiment 1, the first parameter may be applyIndicatedTCIState-r18, and furthermore, the first parameter may be other parameters.

In embodiment 1, the first information includes the first parameter and qcl-info, both of which are optional domains.

In some examples, the first information contains the first parameter and qcl-info as optional domains, for example, the first information includes the first parameter.

In these examples, the first information does not include qcl-info, thereby reducing signaling overhead. However, this disclosure is not limited thereto, for example, in some examples, the first information may include qcl-info.

In these examples, a value of the first parameter is at least used to determine the indicated transmission configuration indication (TCI) state. For example,
the value of the first parameter is a first value, and the transmission configuration indication (TCI) state is a first indicated transmission configuration indication (TCI) state; and/or
the value of the first parameter is a second value, and the transmission configuration indication (TCI) state is a second indicated transmission configuration indication (TCI) state.

In some other examples, the first information includes the first parameter and qcl-info as optional fields, for example, the first information includes qcl-info, and the first information does not include the first parameter.

In these other examples, the determined transmission configuration indication (TCI) state is a transmission configuration indication (TCI) state configured in qcl-info.

In some other examples, the first information includes the first parameter and qcl-info as optional fields, for example, the first information does not include the first parameter and qcl-info.

In these other examples, the determined transmission configuration indication (TCI) state is a default indicated transmission configuration indication (TCI) state, or the terminal equipment determines an error has occurred.

The default indicated transmission configuration indication (TCI) state is the first indicated transmission configuration indication (TCI) state or the second indicated transmission configuration indication (TCI) state.

Embodiment 1 shall be illustrated below with reference to specific implementations.

In some implementations,
if the first information (e.g. a higher layer parameter CSI-AssociatedReportConfigInfo) configures the first parameter (e.g. applyIndicatedTCIState-r18), the indicated TCI state is applied to the aperiodic CSI-RS according to a value of applyIndicatedTCIState-r18;
and if applyIndicatedTCIState-r18 is not configured in the first information, the TCI state configured in qcl-info is applied to the aperiodic CSI-RS.

Specifically, if applyIndicatedTCIState-R18 is configured in CSI-AssociatedReportConfigInfo, the terminal equipment applies the indicated TCI state to the aperiodic CSI-RS according to the value of applyIndicatedTCIState-r18, for example,
if the value of applyIndicatedTCIState-r18, such as 'the first', represents the first indicated joint/downlink TCI state, the terminal equipment applies the first indicated joint/downlink TCI state to the aperiodic CSI-RS;
and if the value of applyIndicatedTCIState-r18, such as 'the second', represents the second indicated joint/downlink TCI state, the terminal equipment applies the second indicated joint/downlink TCI state to the aperiodic CSI-RS.

In the case where applyIndicatedTCIState-r18 is configured, qcl-info may be simultaneously configured in CSI-AssociatedReportConfigInfo or may not be configured. If qcl-info is simultaneously configured in CSI-AssociatedReportConfigInfo, configuration information of qcl-info will be ignored. However, taking saving signaling overhead into account, qcl-info may not be configured in the case where applyIndicatedTCIState-r18 is configured.

If pplyIndicatedTCIState-r18 is not configured, the terminal applies the TCI state configured in qcl-info to the aperiodic CSI-RS.

In addition, if both applyIndicatedTCIState-r18 and qcl-info are not configured in CSI-AssociatedReportConfigInfo, the terminal equipment determines an error has occurred (for example, the terminal equipment does not expect that neither applyIndicatedTCIState-r18 nor qcl-info is configured), or the terminal equipment applies the default indicated TCI state to the aperiodic CSI-RS, the default indicated transmission configuration indication (TCI) state may be the first indicated transmission configuration indication (TCI) state or the second indicated transmission configuration indication (TCI) state.

As shown in Table 1 below:

**Table 1**

| Configuration of parameters | qcl-info is configured | qcl-info is not configured |
|---|---|---|
| applyIndicatedTCIState-r18 is configured | Indicated joint/DL TCI state is applied | Indicated joint/DL TCI state is applied |
| applyIndicatedTCIState-r18 is not configured | TCI state configured in qcl-info is applied | Default indicated joint/DL TCI state is applied, or the terminal equipment determines an error has occurred |

### Embodiment 2

In embodiment 2, the first parameter may be applyIndicatedTCIState-r18, and furthermore, the first parameter may also be other parameters. The second parameter may be followUnifiedTCI-StateCSI-r18, and furthermore, it may also be other parameters.

In embodiment 2, the first information includes the first parameter, the second parameter and qcl-info, the first parameter, the second parameter and qcl-info being optional fields.

In some examples, the first information includes the first parameter, the second parameter and qcl-info as optional fields, for example, the first information includes the second parameter and the first parameter. In these examples, the first information does not include qcl-info, thereby reducing signaling overhead. In addition, this disclosure is not limited thereto, for example, in some examples, the first information may also include qcl-info.

In these examples, the value of the first parameter is at least used to determine the transmission configuration indication (TCI) state. For example,
the value of the first parameter is a first value, and the transmission configuration indication (TCI) state is the first indicated transmission configuration indication (TCI) state; and/or
the value of the first parameter is the second value, and the transmission configuration indication (TCI) state is the second indicated transmission configuration indication (TCI) state.

In some other examples, the first information includes the first parameter, the second parameter and qcl-info as optional fields, for example, the first information includes the second parameter, and the first information does not include the first parameter.

In the other examples, the first information does not include qcl-info, thereby reducing signaling overhead. In addition, this disclosure is not limited thereto, for example, in the other examples, the first information may also include qcl-info.

In the other examples, the determined transmission configuration indication (TCI) state is the default indicated transmission configuration indication (TCI) state.

Wherein, the default indicated transmission configuration indication (TCI) state is the first indicated transmission configuration indication (TCI) state or the second indicated transmission configuration indication (TCI) state.

In some other examples, the first information includes the first parameter, the second parameter and qcl-info as optional fields, for example, the first information includes qcl-info, and the first information does not include the second parameter, wherein the first information may include the first parameter or may not include the first parameter.

In the other examples, the determined transmission configuration indication (TCI) state is the transmission configuration indication (TCI) state configured in qcl-info.

In some other examples, the first information includes the first parameter, the second parameter and qcl-info as optional fields. For example, the first information does not include the second parameter, and the first information does not include qcl-info, wherein the first information may include the first parameter or may not include the first parameter.

In some further examples, the determined transmission configuration indication (TCI) state is the default indicated transmission configuration indication (TCI) state, or the terminal equipment determines an error has occurred.

The default indicated transmission configuration indication (TCI) state is the first indicated transmission configuration indication (TCI) state or the second indicated transmission configuration indication (TCI) state.

Embodiment 2 shall be illustrated below with reference to specific implementations.

### In some implementations,

The second parameter is introduced into the first information (e.g. a higher layer parameter CSI-AssociatedReportConfigInfo), and may be a new parameter, which is named as, for example, followUnifiedTCI-StateCSI-r18. If followUnifiedTCI-StateCSI-r18 is configured in the higher layer parameter CSI-AssociatedReportConfigInfo, ollowUnifiedTCI-StateCSI-r18 may have only one value, such as 'enabled', as shown in Table 2 below.

**Table 2**

| |
|---|
| followUnifiedTCI-StateCSI-r18 ENUMERATED {enabled} |

If the new parameter followUnifiedTCI-StateCSI-r18 is configured in CSI-AssociatedReportConfigInfo (for example, followUnifiedTCI-StateCSI-r18 is configured as 'enabled'), regardless of whether qcl-info is configured in CSI-AssociatedReportConfigInfo, the terminal equipment will apply the indicated TCI state to the aperiodic CSI-RS according to a value of applyIndicatedTCIState-r18. For example,
if the value of applyIndicatedTCIState-r18, such as 'the first', represents the first indicated joint/downlink TCI state, the terminal equipment applies the first indicated joint/downlink TCI state to the aperiodic CSI-RS;
if the value of applyIndicatedTCIState-r18, such as 'the second', represents the second indicated joint/downlink TCI state, the terminal equipment applies the second indicated joint/downlink TCI state to the aperiodic CSI-RS.

If the new parameter followUnifiedTCI-STateCSI-R18 is configured in CSI-AssociatedReportConfigInfo, but applyIndicatedTCIState-r18 is not configured, the default indicated transmission configuration indication (TCI) state will be applied to the aperiodic CSI-RS, wherein the default indicated transmission configuration indication (TCI) state may be the first indicated transmission configuration indication (TCI) state or the second indicated transmission configuration indication (TCI) state.

If the new parameter followUnifiedTCI-StateCSI-r18 is not configured in CSI-AssociatedReportConfigInfo, but qcl-info is configured in CSI-AssociatedReportConfigInfo, the TCI state configured in qcl-info is applied to the aperiodic CSI-RS.

If the new parameter followUnifiedTCI-StateCSI-r18 is not configured in CSI-AssociatedReportConfigInfo, and qcl-info is not configured in CSI-AssociatedReportConfigInfo, the terminal equipment will determine an error has occurred (for example, the terminal equipment does not expect that neither applyIndicatedTCIState-r18 nor qcl-info is configured), or the terminal equipment will apply the default indicated TCI state to the aperiodic CSI-RS, wherein the default indicated transmission configuration indication (TCI) state may be the first indicated transmission configuration indication (TCI) state or the second indicated transmission configuration indication (TCI) state.

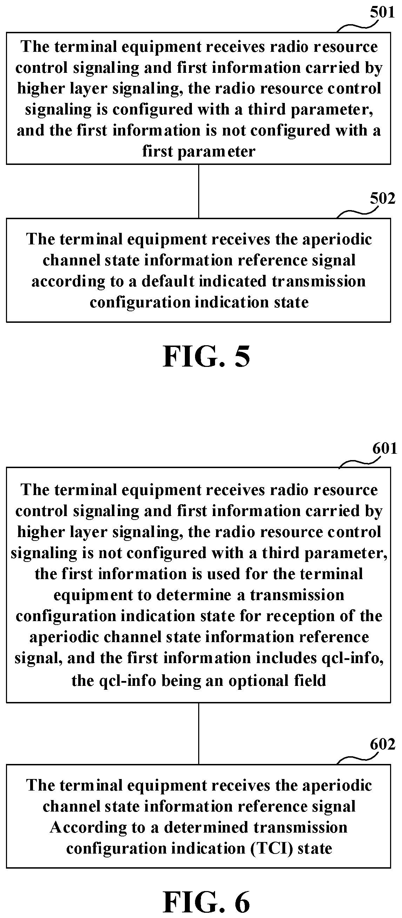

FIG. 5 is another schematic diagram of the method for receiving an aperiodic channel state information reference signal of the embodiment of this disclosure. As shown in FIG. 5, the method includes:
operation 501: The terminal equipment receives radio resource control signaling and first information carried by higher layer signaling, the radio resource control signaling is configured with a third parameter, and the first information is not configured with a first parameter; and
operation 502: The terminal equipment receives the aperiodic channel state information reference signal according to a default indicated transmission configuration indication state.

In operation 501, the first information is, for example, a higher layer parameter CSI-AssociatedReportConfigInfo, and in addition, the first information may also be other information; the first parameter may be applyIndicatedTCIState-r18, and in addition, the first parameter may also be other parameters; and the third parameter may be followUnifiedTCI-State, which is used to indicate whether the terminal equipment applies the indicated TCI state to the aperiodic CSI-RS.

In operation 502, the default indicated transmission configuration indication (TCI) state is the first indicated transmission configuration indication (TCI) state or the second indicated transmission configuration indication (TCI) state.

FIG. 6 is a further schematic diagram of the method for receiving an aperiodic channel state information reference signal of the embodiment of this disclosure. As shown in FIG. 6, the method includes:
operation 601: The terminal equipment receives radio resource control signaling and first information carried by higher layer signaling, wherein the radio resource control signaling is not configured with a third parameter, the first information is used for the terminal equipment to determine a transmission configuration indication (TCI) state for reception of the aperiodic channel state information reference signal (CSI-RS), and the first information includes qcl-info, the qcl-info being an optional field; and
operation 602: The terminal equipment receives the aperiodic channel state information reference signal (CSI-RS) according to a determined transmission configuration indication (TCI) state.

In operation 601, the first information is, for example, a higher layer parameter CSI-AssociatedReportConfigInfo, and furthermore, the first information may also be other information. The first parameter may be applyIndicatedTCIState-r18, and furthermore, the first parameter may also be other parameters. The third parameter may be followUnifiedTCI-State, which is used to indicate whether the terminal equipment applies the indicated TCI state to the aperiodic CSI-RS.

In one embodiment of operation 601, the first information includes qcl-info as an optional field, for example, the first information includes qcl-info, wherein the determined transmission configuration indication (TCI) state is a transmission configuration indication (TCI) state configured in qcl-info.

In another embodiment of operation 601, the first information includes qcl-info as an optional field, for example, the first information does not include qcl-info, wherein the determined transmission configuration indication (TCI) state is a default indicated transmission configuration indication (TCI) state, or the terminal equipment determines an error has occurred.

In operation 601, the default indicated transmission configuration indication (TCI) state is a first indicated transmission configuration indication (TCI) state or a second indicated transmission configuration indication (TCI) state.

The methods shown in FIGs. 5 and 6 shall be described below with reference to embodiment 3.

### Embodiment 3

In some implementations of embodiment 3, a third parameter of radio resource control (RRC) signaling may be used to indicate whether the terminal equipment applies the indicated TCI state to the aperiodic CSI-RS, wherein the third parameter is, for example, followUnifiedTCI-State, and furthermore, the third parameter may also be other parameters in RRC.

In some examples of embodiment 3, if a parameter followUnifiedTCI-State is configured in RRC (for example, followUnifiedTCI-State is configured as 'enabled') and the first parameter (for example, the first parameter is applyIndicatedTCIState-r18) is configured in the first information (such as a higher layer parameter CSI-AssociatedReportConfigInfo), regardless of whether qcl-info is configured in the first information (such as the higher layer parameter CSI-AssociatedReportConfigInfo), the terminal equipment applies the indicated TCI state to the aperiodic CSI-RS according to a value of the first parameter (e.g. applyIndicatedTCIState-r18) in the first information. For example,
if the value of applyIndicatedTCIState-r18, such as 'the first', denotes the first indicated joint/downlink TCI states, the terminal equipment applies the first indicated joint/downlink TCI states to the aperiodic CSI-RS; and
if the value of applyIndicatedTCIState-r18, such as 'the second', denotes the second indicated joint/downlink TCI states, the terminal equipment applies the second indicated joint/downlink TCI states to the aperiodic CSI-RS.

In some other examples of embodiment 3, if the parameter followUnifiedTCI-State is configured in RRC (for example, followUnifiedTCI-State is configured as 'enabled') and the first parameter (for example, the first parameter is applyIndicatedTCIState-r18) is not configured in the first information, the default indicated TCI state is applied to the aperiodic CSI-RS.

In some other examples of embodiment 3, if the parameter followUnifiedTCI-State is not configured in RRC and qcl-info is configured in the first information (such as the higher layer parameter CSI-AssociatedReportConfigInfo), the terminal equipment applies the TCI state configured in qcl-info to the aperiodic CSI-RS.

In some other examples of embodiment 3, if the parameter followUnifiedTCI-State is not configured in RRC and qcl-info is not configured in the first information (such as the higher layer parameter CSI-AssociatedReportConfigInfo), the terminal equipment applies the default indicated TCI state to the aperiodic CSI-RS, or, the terminal equipment determines to be erroneous, wherein the default indicated transmission configuration indication (TCI) state is the first indicated transmission configuration indication (TCI) state or the second indicated transmission configuration indication (TCI) state.

The embodiment of the first aspect of this disclosure clarifies a TCI state applied when the terminal equipment receives the aperiodic CSI-RS, resolves ambiguities in receiving the aperiodic CSI-RS, and may efficiently improve reliability of transmission of the system.

### Embodiment of a second aspect

Embodiment of the second aspect of this disclosure provides an apparatus for receiving an aperiodic channel state information reference signal, applicable to a terminal equipment, such as the terminal equipment 302 in FIG. 3. This apparatus corresponds to the method for receiving an aperiodic channel state information reference signal in the embodiment of the first aspect.

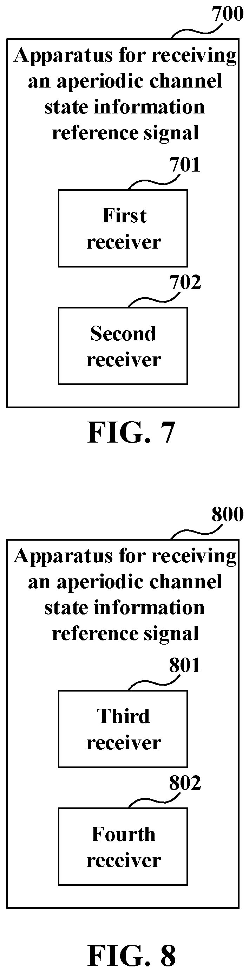

FIG. 7 is a schematic diagram of the apparatus for receiving an aperiodic channel state information reference signal of the embodiment of the second aspect of this disclosure. As shown in FIG. 7, the apparatus 700 for receiving an aperiodic channel state information reference signal includes a first receiver 701 and a second receiver 702.

The first receiver 701 is configured to receive first information carried by higher layer signaling, the first information being at least used for the terminal equipment to determine a transmission configuration indication state for reception of the aperiodic channel state information reference signal, wherein the first information includes a first parameter and qcl-info, the first parameter and qcl-info being optional fields, or the first information includes a first parameter, a second parameter and qcl-info, the first parameter, the second parameter and qcl-info being optional fields. And the second receiver 702 is configured to receive the aperiodic channel state information reference signal according to the determined transmission configuration indication state.

In at least some embodiments, the determined transmission configuration indication state includes:
an indicated transmission configuration indication state, or a transmission configuration indication state configured in qcl-info.

In at least some embodiments, the first information includes a first parameter and qcl-info as optional fields, for example,
the first information includes the first parameter,
and a value of the first parameter is at least used to determine the transmission configuration indication state.

In at least some embodiments, the value of the first parameter is a first value, and the transmission configuration indication state is a first indicated transmission configuration indication state; and/or
the value of the first parameter is a second value, and the transmission configuration indication state is a second indicated transmission configuration indication state.

In at least some embodiments, the first information does not include qcl-info.

In at least some embodiments, the first information includes a first parameter and qcl-info, for example,
the first information includes qcl-info, and the first information does not include the first parameter,
and the determined transmission configuration indication state is a transmission configuration indication state configured in qcl-info.

In at least some embodiments, the first information includes a first parameter and qcl-info, for example,
the first information does not include the first parameter and qcl-info,
and the determined transmission configuration indication state is a default indicated transmission configuration indication state, or the terminal equipment determines an error has occurred.

In at least some embodiments, the default indicated transmission configuration indication state is the first indicated transmission configuration indication state or a second indicated transmission configuration indication state.

In at least some embodiments, the first information includes a first parameter, a second parameter and qcl-info, for example,
the first information includes the second parameter and the first parameter,
and a value of the first parameter is at least used to determine the transmission configuration indication state.

In at least some embodiments, the value of the first parameter is a first value, and the transmission configuration indication state is the first indicated transmission configuration indication state; and/or
the value of the first parameter is a second value, and the transmission configuration indication state is the second indicated transmission configuration indication state.

In at least some embodiments, the first information includes a first parameter, a second parameter and qcl-info, for example,
the first information includes the second parameter, and the first parameter does not include the first parameter,
and the determined transmission configuration indication state is a default indicated transmission configuration indication state.

In at least some embodiments, the first information does not include qcl-info.

In at least some embodiments, the default indicated transmission configuration indication state is the first indicated transmission configuration indication state or the second indicated transmission configuration indication state.

In at least some embodiments, the first information includes a first parameter, a second parameter and qcl-info, for example,
the first information includes qcl-info, and the first information does not include the second parameter,
and the determined transmission configuration indication state is a transmission configuration indication state configured in qcl-info.

In at least some embodiments, the first information includes a first parameter, a second parameter and qcl-info, for example,
the first information does not include the second parameter and qcl-info,
and the determined transmission configuration indication state is a default indicated transmission configuration indication state, or the terminal equipment determines an error has occurred.

In at least some embodiments, the default indicated transmission configuration indication state is the first indicated transmission configuration indication state or the second indicated transmission configuration indication state.

FIG. 8 is another schematic diagram of the apparatus for receiving an aperiodic channel state information reference signal of the embodiment of the second aspect. As shown in FIG. 8, the apparatus 800 for receiving an aperiodic channel state information reference signal includes:
a third receiver 801 configured to receive radio resource control signaling and first information carried by higher layer signaling, wherein the radio resource control signaling is configured with a third parameter, and the first information is not configured with a first parameter; and
a fourth receiver 802 configured to receive the aperiodic channel state information reference signal according to a default indicated transmission configuration indication state.

The default indicated transmission configuration indication state is a first indicated transmission configuration indication state or a second indicated transmission configuration indication state.

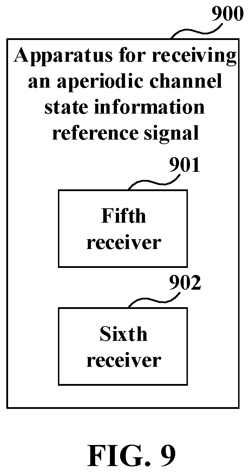

FIG. 9 is a further schematic diagram of the apparatus for receiving an aperiodic channel state information reference signal of the embodiment of the second aspect. As shown in FIG. 9, the apparatus 900 for receiving an aperiodic channel state information reference signal includes:
a fifth receiver 901 configured to receive radio resource control signaling and first information carried by higher layer signaling, wherein the radio resource control signaling is not configured with a third parameter, the first information is used for the terminal equipment to determine a transmission configuration indication state for reception of the aperiodic channel state information reference signal, and the first information includes qcl-info, qcl-info being an optional field; and
a sixth receiver 902 configured to receive the aperiodic channel state information reference signal according to a determined transmission configuration indication state.

In at least some embodiments, the first information includes qcl-info as an optional field, for example,
the first information includes qcl-info,
and the determined transmission configuration indication state is a transmission configuration indication state configured in qcl-info.

In at least some embodiments, the first information includes qcl-info as an optional field, for example,
the first information does not include qcl-info,
and the determined transmission configuration indication state is a default indicated transmission configuration indication state, or the terminal equipment determines an error has occurred, wherein the default indicated transmission configuration indication state is a first indicated transmission configuration indication state or a second indicated transmission configuration indication state.

The embodiment of the second aspect of this disclosure clarifies a TCI state applied when the terminal equipment receives the aperiodic CSI-RS, resolves ambiguities in receiving the aperiodic CSI-RS, and may efficiently improve reliability of transmission of the system.

### Embodiment of a third aspect

Embodiment of the second aspect of this disclosure provides a communication system, including a network device and a terminal equipment.

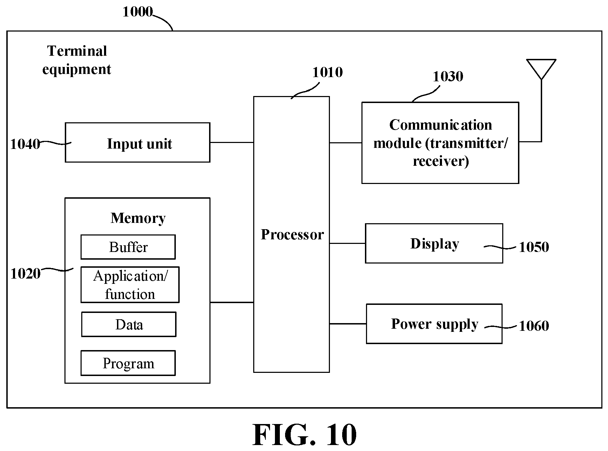

FIG. 10 is a schematic diagram of an electronic device of the third aspect of this disclosure. The electronic device 1000 may correspond to the terminal equipment 302 in FIG. 2, and may include a processor 1010 and a memory 1020, the memory 1020 storing data and a program and being coupled to the processor 1010. It should be noted that this figure is illustrative only, and other types of structures may also be used, so as to supplement or replace this structure and achieve a telecommunications function or other functions.

For example, the processor 1010 may be configured to execute a program to carry out the method as described in the embodiment of the first aspect.

As shown in FIG. 10, the terminal equipment 1000 may further include a communication module 1030, an input unit 1040, a display 1050, and a power supply 1060; wherein functions of the above components are similar to those in the prior art, which shall not be described herein any further. It should be noted that the terminal equipment 1000 does not necessarily include all the parts shown in FIG. 10, and the above components are not necessary. Furthermore, the terminal equipment 1000 may include parts not shown in FIG. 10, and the prior art may be referred to.

An embodiment of this disclosure provides a computer readable program code, which, when executed in a terminal equipment, will cause the terminal equipment to carry out the method as described in the embodiment of the first aspect.

An embodiment of this disclosure provides a computer readable medium, including a computer readable program code, which will cause a terminal equipment to carry out the method as described in the embodiment of the first aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.
1. A method for receiving an aperiodic channel state information reference signal, applicable to a terminal equipment, the method including:
   receiving first information carried by higher layer signaling, the first information being at least used for the terminal equipment to determine a transmission configuration indication state for reception of the aperiodic channel state information reference signal, wherein the first information includes a first parameter and qcl-info, the first parameter and qcl-info being optional fields, or the first information includes a first parameter, a second parameter and qcl-info, the first parameter, the second parameter and qcl-info being optional fields; and
   receiving the aperiodic channel state information reference signal according to the transmission configuration indication state as determined.
2. The method according to supplement 1, wherein that the first information includes a first parameter and qcl-info includes that:
   the first information includes the first parameter,
   and a value of the first parameter is at least used to determine the transmission configuration indication state.
3. The method according to supplement 1, wherein that the first information includes a first parameter and qcl-info includes that:
   the first information includes qcl-info, and the first information does not include the first parameter,
   and the transmission configuration indication state as determined is a transmission configuration indication state configured in qcl-info.
4. The method according to supplement 1, wherein that the first information includes a first parameter and qcl-info includes that:
   the first information does not include the first parameter and qcl-info,
   and the transmission configuration indication state as determined is a default indicated transmission configuration indication state, or the terminal equipment determines an error has occurred.
5. The method according to supplement 1, wherein that the first information includes a first parameter, a second parameter and qcl-info includes that:
   the first information includes the second parameter and the first parameter,
   and a value of the first parameter is at least used to determine the transmission configuration indication state.
6. The method according to supplement 1, wherein that the first information includes a first parameter, a second parameter and qcl-info includes that:
   the first information includes the second parameter, and the first parameter does not include the first parameter,
   and the transmission configuration indication state as determined is a default indicated transmission configuration indication state.
7. The method according to supplement 1, wherein that the first information includes a first parameter, a second parameter and qcl-info includes that:
   the first information includes qcl-info, and the first information does not include the second parameter,
   and the transmission configuration indication state as determined is a transmission configuration indication state configured in qcl-info.
8. The method according to supplement 1, wherein that the first information includes a first parameter, a second parameter and qcl-info includes that:
   the first information does not include the second parameter and qcl-info,
   and the transmission configuration indication state as determined is a default indicated transmission configuration indication state, or the terminal equipment determines an error has occurred.
9. A method for receiving an aperiodic channel state information reference signal, applicable to a terminal equipment, the method including:
   receiving radio resource control signaling and first information carried by higher layer signaling, wherein the radio resource control signaling is configured with a third parameter, and the first information is not configured with a first parameter; and
   receiving the aperiodic channel state information reference signal according to a default indicated transmission configuration indication state.
10. A method for receiving an aperiodic channel state information reference signal, applicable to a terminal equipment, the method including:
   receiving radio resource control signaling and first information carried by higher layer signaling, wherein the radio resource control signaling is not configured with a third parameter, the first information is used for the terminal equipment to determine a transmission configuration indication state for reception of the aperiodic channel state information reference signal, and the first information includes qcl-info, qcl-info being an optional field; and
   receiving the aperiodic channel state information reference signal according to a determined transmission configuration indication state.

## Claims

1. An apparatus for receiving an aperiodic channel state information reference signal, applicable to a terminal equipment, the apparatus comprising:
a first receiver configured to receive first information carried by higher layer signaling, the first information being at least used for the terminal equipment to determine a transmission configuration indication state for reception of an aperiodic channel state information reference signal, wherein the first information comprises a first parameter and qcl-info, the first parameter and the qcl-info being optional fields, or the first information comprises a first parameter, a second parameter and qcl-info, the first parameter, the second parameter and the qcl-info being optional fields; and
a second receiver configured to receive the aperiodic channel state information reference signal according to the transmission configuration indication state as determined.

2. The apparatus according to claim 1, wherein,
the transmission configuration indication state as determined comprises:
an indicated transmission configuration indication state, or a transmission configuration indication state configured in the qcl-info.

3. The apparatus according to claim 1, wherein that the first information comprises a first parameter and qcl-info comprises that:
the first information comprises the first parameter,
and a value of the first parameter is at least used to determine the transmission configuration indication state.

4. The apparatus according to claim 3, wherein,
the value of the first parameter is a first value, and the transmission configuration indication state is a first indicated transmission configuration indication state; and/or
the value of the first parameter is a second value, and the transmission configuration indication state is a second indicated transmission configuration indication state.

5. The apparatus according to claim 3, wherein,
the first information does not comprise the qcl-info.

6. The apparatus according to claim 1, wherein that the first information comprises a first parameter and qcl-info comprises that:
the first information comprises the qcl-info, and the first information does not comprise the first parameter,
and the transmission configuration indication state as determined is a transmission configuration indication state configured in the qcl-info.

7. The apparatus according to claim 1, wherein that the first information comprises a first parameter and qcl-info comprises that:
the first information does not comprise the first parameter and the qcl-info,
and the transmission configuration indication state as determined is a default indicated transmission configuration indication state, or the terminal equipment determines an error has occurred.

8. The apparatus according to claim 7, wherein,
the default indicated transmission configuration indication state is a first indicated transmission configuration indication state or a second indicated transmission configuration indication state.

9. The apparatus according to claim 1, wherein that the first information comprises a first parameter, a second parameter and qcl-info comprises that:
the first information comprises the second parameter and the first parameter,
and a value of the first parameter is at least used to determine the transmission configuration indication state.

10. The apparatus according to claim 9, wherein,
the value of the first parameter is a first value, and the transmission configuration indication state is a first indicated transmission configuration indication state; and/or
the value of the first parameter is a second value, and the transmission configuration indication state is a second indicated transmission configuration indication state.

11. The apparatus according to claim 1, wherein that the first information comprises a first parameter, a second parameter and qcl-info comprises that:
the first information comprises the second parameter, and the first information does not comprise the first parameter,
and the transmission configuration indication state as determined is a default indicated transmission configuration indication state.

12. The apparatus according to claim 11, wherein,
the first information does not comprise the qcl-info.

13. The apparatus according to claim 11, wherein,
the default indicated transmission configuration indication state is a first indicated transmission configuration indication state or a second indicated transmission configuration indication state.

14. The apparatus according to claim 1, wherein that the first information comprises a first parameter, a second parameter and qcl-info comprises that:
the first information comprises the qcl-info, and the first information does not comprise the second parameter,
and the transmission configuration indication state as determined is a transmission configuration indication state configured in the qcl-info.

15. The apparatus according to claim 1, wherein that the first information comprises a first parameter, a second parameter and qcl-info comprises that:
the first information does not comprise the second parameter and the qcl-info,
and the transmission configuration indication state as determined is a default indicated transmission configuration indication state, or the terminal equipment determines an error has occurred.

16. The apparatus according to claim 15, wherein,
the default indicated transmission configuration indication state is a first indicated transmission configuration indication state or a second indicated transmission configuration indication state.

17. An apparatus for receiving an aperiodic channel state information reference signal, applicable to a terminal equipment, the apparatus comprising:
a third receiver configured to receive radio resource control signaling and first information carried by higher layer signaling, wherein the radio resource control signaling is configured with a third parameter, and the first information is not configured with a first parameter; and
a fourth receiver configured to receive the aperiodic channel state information reference signal according to a default indicated transmission configuration indication state.

18. An apparatus for receiving an aperiodic channel state information reference signal, applicable to a terminal equipment, the apparatus comprising:
a fifth receiver configured to receive radio resource control signaling and first information carried by higher layer signaling, wherein the radio resource control signaling is not configured with a third parameter, the first information is used for the terminal equipment to determine a transmission configuration indication state for reception of the aperiodic channel state information reference signal, and the first information comprises qcl-info, the qcl-info being an optional field; and
a sixth receiver configured to receive the aperiodic channel state information reference signal according to the transmission configuration indication state as determined.

19. The apparatus according to claim 18, wherein that the first information comprises qcl-info comprises that:
the first information comprises the qcl-info,
and the transmission configuration indication state as determined is a transmission configuration indication state configured in the qcl-info.

20. The apparatus according to claim 18, wherein that the first information comprises qcl-info comprises that:
the first information does not comprise the qcl-info,
and the transmission configuration indication state as determined is a default indicated transmission configuration indication state, or the terminal equipment determines an error has occurred.
